# FASCICULE DE BREVET EUROPEEN

(11) **EP 0 457 676 B1**
(45) Date de publication et mention de la délivrance du brevet: **21.09.1994**
(21) Numéro de dépôt: 91401248.9
(22) Date de dépôt: 15.05.1991
(51) Int. Cl.: B29D 12/00, B29C 67/18, B01D 63/08, B01D 17/00

(54) **Procédé de fabrication d'un cadre séparateur pour un empilement dans un dispositif d'échange**
Verfahren zur Herstellung einer Distanzplatte für einen Stapel in einer Austauschvorrichtung
Process for the manufacture of a separator plate for a stack in an exchange device

(30) Priorité: 15.05.1990 FR 9006594
(43) Date de publication de la demande: 21.11.1991
(73) Titulaire: EURODIA INDUSTRIE SA, 91320 WISSOUS (FR)
(72) Inventeur: Guerif, Gérard, F-91790 Boissy Sous Saint Yon (FR)
(74) Mandataire: Hénnion, Jean-Claude

(56) Documents cités:
- EP-A- 0 192 593
- EP-A- 0 365 410
- WO-A-82/00775
- DE-A- 2 164 284
- DE-A- 3 103 464
- US-A- 3 878 086

## Description

La présente invention concerne la fabrication d'un cadre séparateur qui sépare deux membranes échangeuses et qui permet la circulation des fluides dans les dispositifs d'échange, du type dialyse, électrodialyse, osmose inverse ou ultra-filtration .

Dans les dispositifs d'échange par membrane, les membranes échangeuses sont placées sous forme d'empilement, parallèlement les unes aux autres, séparées et maintenues par les cadres séparateurs. Ces cadres sont composés d'une pièce rigide appelée plan de joint assure l'étanchéité du dispositif. Elle est percée d'orifices qui, dans l'empilement, assurent l'ecoulement des fluides ; ce sont les conduits d'alimentation et d'évacuation du fluide. La structure ajourée permet la circulation du fluide dans la partie centrale évidée et entre cette partie centrale et l'un ou l'autre des orifices d'écoulement des fluides par l'intermédiaire d'évidements dénommés diffuseurs.

Chaque zone d'échange est constituée par un empilement d'une première membrane échangeuse perméable à certains éléments, d'un cadre séparateur et d'une seconde membrane échangeuse perméable aux mêmes ou à d'autres éléments.

Il existe trois types de cadres séparateurs. Dans le premier type les cadres sont constitués d'éléments non solidaires les uns des autres, à savoir le plan de joint, la structure ajourée correspondant à l'évidement central et les structures ajourées correspondant aux diffuseurs. Ainsi la formation d'un empilement nécessite la mise en oeuvre précise d'un nombre important de pièces, ce qui rend cette opération fort délicate et longue.

Le deuxième type de cadre remédie à cet inconvénient en ce que les cadres séparateurs sont d'une seule pièce. La fabrication d'un tel cadre est réalisée en particulier par assemblage de plusieurs feuilles thermoplastiques découpées à la forme du plan de joint, entre lesquelles la structure ajourée est prise en sandwich.

Cependant ce deuxième type de cadre présente des inconvénients. Pour obtenir l'assemblage du plan de joint et de la structure ajourée, il est nécessaire de sélectionner certains matériaux thermoplastiques. L'élasticité de ces matériaux est généralement plus faible que celle du plan joint traditionnel en caoutchouc, mais de plus la présence de structures ajourées dans l'assemblage diminue considérablement cette élasticité, à la manière de ce qui se passe dans un matériau armé. Cette élasticité réduite du plan de joint conduit à augmenter la pression de serrage appliquée à l'empilement pour obtenir une bonne étanchéité, avec le risque de flambage que cela comporte.

Un troisième type de cadre séparateur est decrit dans le document DE.A.3 103 464. Le cadre est d'une seule pièce ; il est obtenu par moulage, sur les bords de la structure ajourée, du plan de joint garni de joints d'étanchéité longiformes. Selon le procédé décrit, on soumet les bords de la structure ajourée à une compression visant à réduire son épaisseur, puis à mouler le plan de joint sur la partie comprimée de telle sorte que la partie non-comprimée de la structure ajourée située dans l'évidement central corresponde sensiblement à l'épaisseur du cadre, au niveau des joints d'étanchéité en forme de lignes.

Cet écrasement a pour effet d'aplatir les éléments unitaires constitutifs de la structure ajourée, ayant généralement au départ une section sensiblement circulaire. Cet aplatissement conduit à une réduction de l'épaisseur de la structure ajourée dans le plan de joint. Ils'ensuit que la perte d'élasticité due à la présence de la structure ajourée est en terme relatif nettement moindre qu'avec une structure ajourée non aplatie. On comprend qu'il n'est pas envisageable de partir d'une structure ajourée ayant des éléments unitaires de diamètre plus petit ; en effet il importe que dans le cadre séparateur l'épaisseur du plan de joint soit sensiblement équivalente ou légèrement supérieure à l'épaisseur de la structure ajourée , faute de quoi les membranes ne seraient pas soutenues et présenteraient des déformations préjudiciables au bon Fonctionnement du dispositif d'échange.

Dans le document DE.A.3 103 464, il est prévu que la structure ajourée puisse recouvrir l'évidement central et aussi les diffuseurs.

Cependant il est techniquement intéréssant que le type de structure ajourée recouvrant les diffuseurs diffère de la structure ajourée recouvrant l'évidement central, en particullier il est souhaitable que le maillage soit plus dense et éventuellemennt que son épaisseur soit supérieure.

Ceci peut être obtenu dans les cadres du premier type mais pas dans les cadres du deuxième et troisième type précité.

Or on a trouvé et c'est ce qui fait l'objet de l'invention un procédé de fabrication d'un cadre d'une seule pièce qui peut comporter des structures ajourées différentes dans l'évidement central et dans les diffuseurs et qui présente une parfaite étanchéité.

Le procédé concerne la fabrication d'un cadre séparateur pour empilement dans un dispositif d'échange, qui comporte d'une part un plan de joint imperméable ayant un évidement central, des orifices de circulation des fluides et des diffuseurs reliant l'évidement central auxdits orifices et d'autre part au moins une structure ajourée s'étendant sur l'évidement central et les diffuseurs. De manière connue il consiste à assembler des films thermoplastiques, ayant la configuration du plan de joint, entre lesquels est intercalée la structure ajourée.

Selon l'invention, de manière caractérisitique , une première structure ajourée, qui est dans un matériau thermoplastique est soumise préalablement à l'assemblage à un écrasement, par compression à chaud, qui est réalisé sur toute sa surface, exception faite de l'évidement central, on effectue dans la structure ajourée ainsi partiellement écrasée des découpes correspondant aux diffuseurs et aux zones prolongeant latéralement chaque diffuseur et on réalise l'assemblage après avoir placé à l'emplacement des découpes correspondant à chaque diffuseur et aux zones latérales des morceaux d'une seconde structure ajourée dont les pattes latérales destinées à recouvrir les zones prolongeant latéralement le diffuseur ont été écrasées, les découpes correspondant aux orifices de circulation des fluides ayant été effectuées avant ou après l'assemblage.

Ainsi l'assemblage réalise, en une seule opération, la constitution du plan de joint, la mise en place de la première structure ajourée dans l'évidement central et la mise en place de la seconde structure ajourée dans les diffuseurs, les pattes latérales assurant l'ancrage de cette seconde structure dans le plan de joint. De plus , ces pattes latérales ayant également été écrasées, de manière à obtenir la même épaisseur que pour la première structure ajourée, il n'y a pas d'hétérogénéité au niveau de l'élasticité du plan de joint. Bien sûr la configuration du morceau de seconde structure ajourée doit après écrasement être la plus proche possible de l'emplacement laissé libre par la découpe des diffuseurs et des zones latérales prolongeant les diffuseurs.

De préférence l'assemblage est réalisé de manière connue par soudage haute-fréquence.

Parmi les films thermoplastiques , ayant une élasticité convenable et soudables par haute fréquence, on a retenu particulièrement l'éthyl vinyl acétate. Dans ce cas on utilise avantageusement comme structure ajourée une grille en polyéthylène; en effet l'éthyl vinyl acétate manifeste une bonne adhérence sur le polyéthylène de la structure ajourée lors de l'assemblage.

D'autres avantages et caractéristiques apparaîtront plus clairement à la lecture de la description qui va être faite d'un exemple de fabrication d'un cadre séparateur avec écrasement avant assemblage de deux structures ajourées, illustré par le dessin annexé dans lequel :
La figure 1 est une représentation schématique de la première structure ajourée avant écrasement ;
La figure 2 est une représentation schématique de la première structure ajourée sur laquelle on a délimité la zone d'écrasement;
La figure 3 est une représentation schématique de la première structure ajourée après écrasement et découpe ;
La figure 4 est une représentation schématique de la seconde structure ajourée , après écrasement ;
La figure 5 schématise la superposition des films thermoplastiques et des structures ajourées avant assemblage;
La figure 6 est une vue de dessus du cadre séparateur de l'invention après assemblage ;
Les figures 7 et 8 sont des vues en coupe selon l'axe AA de la figure 6 respectivement avant et après assemblage ;
La figure 9 est une vue en coupe selon l'axe BB de la figure 6.

Le cadre séparateur 1 dont la fabrication va être décrite ci-après est destiné à équiper une installation pilote. Il a une forme rectangulaire de 20 cm x 51 cm.

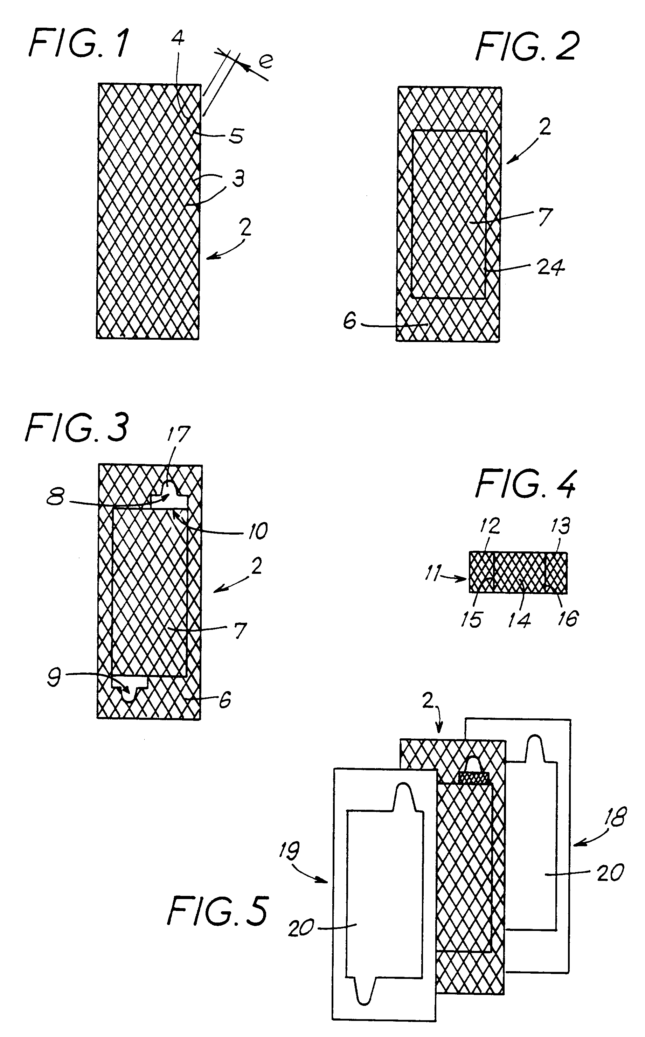

La première structure ajourée montrée à la figure 1 est une grille 2 de polyéthylène dont les dimensions correspondent à celles du cadre. Cette grille 2 est formée par l'entrecroisement d'éléments filiformes 3 de section sensiblement circulaire, formant un maillage en losange ; l'écartement e entre deux éléments filiformes 4,5 parallèles et adjacents est sensiblement de 3mm ; l'angle le plus ouvert du losange est de l'ordre de 130°. Le diamètre de chaque élément filiforme 3 est de l'ordre de 0,425mm.

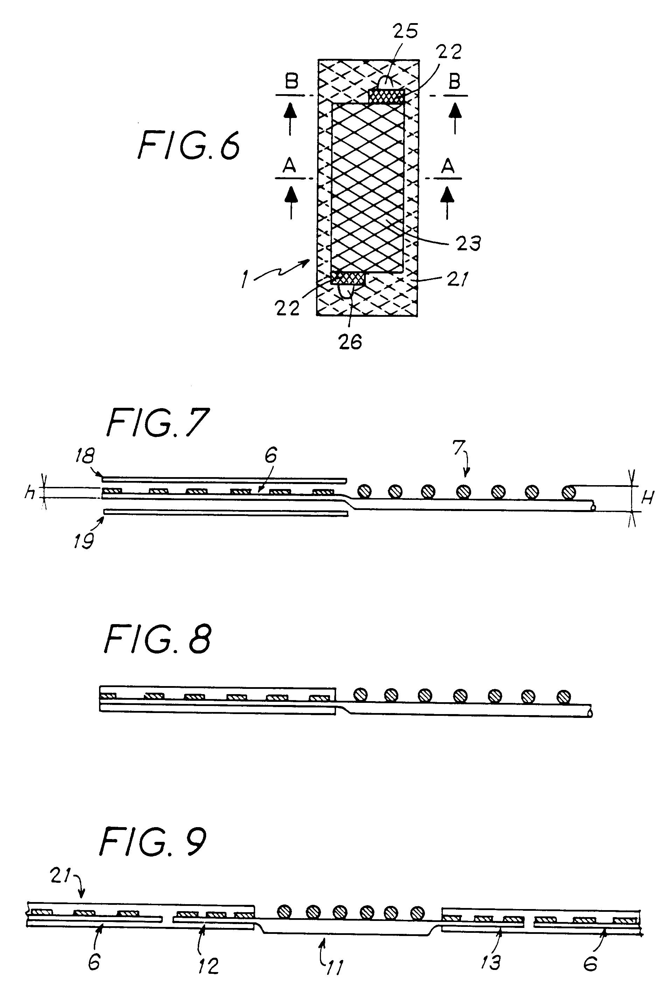

Sur la première grille 2 on réalise une compression à chaud de toute la surface périphérique 6 qui délimite une partie centrale 7 rectangulaire selon la ligne continue 24. Les conditions du pressage sont fonctions du matériau constitutif de la grille et de l'épaisseur h (figure 7) qui est souhaitée comparativement à l'épaisseur H de la grille 2 avant pressage, la température étant proche du point de ramolissement dudit matériau, la hauteur h de la grille 2 aplatie était de 0,2mm, tandis que celle H de la grille 2 avant pressage était de 0,85mm.

Dans la partie aplatie 6 de la grille 2, on découpe à l'emporte-pièce deux emplacements 8,9 , disposés symétriquement par rapport à la partie centrale 7 et attenant à celle-ci. Chaque découpe a la forme d'un rectangle dont l'un des grands côtés 10 est commun à la partie centrale 7 et dont l'autre côté est déformé dans sa partie médiane par un prolongement 17 extérieur partiellement arrondi , comme cela est montré sur la figure 3. On comprendra quelle doit être plus exactement la forme de chaque découpe 8,9 à la lecture de la suite de la description.

On prépare des morceaux 11 rectangulaires d'une seconde structure ajourée (figure 4) . Cette seconde structure est une grille de polyéthylène obtenue à partir des mêmes éléments filiformes que la première grille 2 et qui a donc la même épaisseur totale H de 0,85mm. Cependant le maillage est plus serré, avec un écartement entre deux éléments filiformes parallèles et adjacents de 1,5mm environ et un angle le plus ouvert de 120°. Les dimensions du morceau 11 sont déterminées de façon qu'après écrasement des deux bandes latérales 12,13 le morceau 11 puisse se loger le plus exactement possible dans l'emplacement 8,9 laissé libre par la découpe réalisée dans la première grille 2. Dans l'exemple précité, le morceau 11 était un rectangle de 6cm x 3cm.

L'écrasement des bandes latérales 12,13 du morceau 11 est réalisé dans des conditions similaires à celles décrites ci-dessus, délimitant une bande centrale 14 non aplatie selon les traits continus 15,16 sur la figure 4.

Lorsque le morceau 11 est placé dans l'emplacement 8,9 de la découpe, le prolongement 17 extérieur est dans la continuation de la bande centrale 14.

On a représenté sur la figure 5 la superposition de deux films thermoplastiques 18,19 et de la grille 2 après placement de deux morceaux 11 comme décrit ci-dessus. La grille 2 est placée entre les deux films 18,19. Chaque film 18,19 est en éthyl-vinyl acétate. Il a une forme rectangulaire de mêmes dimensions extérieures que le cadre 1. Il comporte une partie évidée 20 dont la disposition et la forme correspondent d'une part à celles de la partie centrale 7 non écrasée de la première grille 2 et d'autre part à celles des deux découpes 8,9 faites dans cette première grille 2 exception faite des deux zones correspondant à l'emplacement des deux bandes latérales 12,13 lorsque le morceau 11 est placé dans son logement.

Comme on peut le voir sur la figure 7, dans la superposition, les films thermoplastiques 18,19 font face aux parties écrasées 6 de la grille 2.

L'assemblage est réalisé par la technique bien connue de soudage haute-fréquence. Les films d'éthyl vinyl acétate 18,19 sont dans cette opération portés à la fois en température et en pression en sorte d'assurer la formation d'un ensemble cohérent constituant le plan de joint 21 du cadre séparateur 1; cet ensemble est d'autant plus cohérent que, les grilles 2,11 étant en polyéthylène, il se produit un accrochage entre le polyéthylène et l'éthyl vinyl acétate.

L'épaisseur du plan de joint (figure 8) est sensiblement la même que celle de la première grille 1.

Comme on peut le voir à l'examen de la figure 9, la seconde grille 11 est solidement ancrée dans le plan de joint 21 par l'assemblage des films 18,19 et des bandes latérales 12,13 aplaties. La partie non aplatie de la seconde grille 11 et donc non assemblée dans le plan de joint 21 correspond à un diffuseur 22 du cadre séparateur 1, tandis que la partie non aplatie de la première grille 2 et donc non assemblée dans le plan de joint 21 correspond à la zone d'échange 23 du cadre séparateur 1. Les zones des découpes 8,9 non recouvertes par l'une ou l'autre grille 2,11 correspondent aux orifices de circulation des fluides 25,26.

L'invention n'est pas limitée au mode de réalisation qui a été décrit à titre d'exemple non exhaustif , mais en couvre toutes les variantes. En particulier , les films thermoplastiques peuvent être dans un autre matériau, par exemple en polychlorure de vinyl, en éthyl butyl acétate ou en polyuréthanne, qui sont des matériaux soudables par la technique haute-fréquence et présentant une certaine élasticité.

Dans une autre variante de réalisation, la découpe des zones correspondant aux orifices de circulation peut n'avoir lieu qu'après l'assemblage. Dans ce cas, les emplacements 8,9 seront rectangulaires, et aptes à recevoir les morceaux 11 de la seconde structure ajourée.

Par ailleurs, afin d'obtenir un positionnement très précis des films thermoplastiques 18,19 et de la grille 2 en vue de leur assemblage, il est préférable que chacun de ces composants ait des dimensions supérieures à celles strictement décrites dans l'exemple ci-dessus, dégageant une zone périphérique de centrage, et de réaliser lors de la première découpe, des évidements disposés identiquement dans cette zone , de telle sorte que , lors de la superposition des deux films 18,19 et de la grille 2, on fait pénétrer lesdits évidements périphériques sur des ergots de centrage. Après l'assemblage, on réalise le détourage du cadre séparateur en découpant les zones périphériques assemblées.

## Revendications

1. Procédé de fabrication d'un cadre séparateur (1) pour empilement dans des dispositifs d'échange, ledit cadre (1) comportant d'une part un plan de joint (21) imperméable ayant un évidement central, des orifices de circulation des fluides (25,26) et deux diffuseurs reliant l'évidement central auxdits orifices et d'autre part au moins une structure ajourée s'étendant sur l'évidement central et les diffuseurs , consistant à assembler des films thermoplastiques (18,19) , ayant la configuration du plan de joint (21) entre lesquels est intercalée la structure ajourée, caractérisé en ce qu'une première structuré ajourée(2), qui est dans un matériau thermoplastique, est soumise préalablement à l'assemblage à un écrasement, par compression à chaud, qui est réalisé sur toute sa surface, exception faite de l'évidement central (7), en ce qu'on effectue dans la structure ajourée (6) ainsi partiellement écrasée des découpes correspondant aux diffuseurs (22) et aux zones prolongeant latéralement chaque diffuseur (22) et en ce que on réalise l'assemblage après avoir placé à l'emplacement des découpes correspondant à chaque diffuseur et aux zones latérales des morceaux d'une seconde structure ajourée (11) dont les pattes latérales (15,16) destinées à recouvrir les zones prolongeant latéralement le diffuseur ont été écrasées, les découpes correspondant aux orifices de circulation des fluides (25,26) ayant été effectuées avant ou après l'assemblage.

2. Procédé selon la revendication 1 caractérisé en ce que l'assemblage est réalisé par soudage par haute-fréquence.

3. Procédé selon la revendication 2 caractérisé en ce que les structures ajourées (2,11) sont des grille de polyéthylène et les films thermoplastiques (18,19) constitutifs du plan de joint sont en éthyl vinyl acétate.

4. Procédé selon l'une des revendications 1 ou 3 caractérisé en ce que les structures ajourées respectivement de l'évidement central et du diffuseur sont des grilles maillées en losange, la grille (11) du diffuseur (22) ayant une densité de maillage plus élevée que celle (2) de l'évidement central (23).

5. Procédé selon la revendication 1 caractérisé en ce que, la première structure ajourée (2) et les deux films thermoplastiques (18,19) ayant chacun une zone périphérique de centrage, on découpe, avant assemblage, des évidements de centrage disposés identiquement dans chacune de ces zones, on réalise la superposition en plaçant les évidements sur des ergots de centrage, puis, après assemblage, on réalise le détourage du cadre séparateur en découpant les zones périphériques assemblées.

## Claims

1. Method of manufacturing a separator frame (1) for stacking in exchanger devices, said frame (1) comprising on the one hand, an impermeable seal frame (21) having a central opening, fluid flow orifices (25, 26) and two diffusers connecting the central opening to said orifices; and on the other hand, at least one expanded structure spreading over the central opening and the diffusers, consisting in assembling thermoplastic films (18, 19) having the shape of the seal plane (21) with the expanded structure being interposed therebetween, characterized in that, prior to assembly, a first expanded structure (2), made of a thermoplastic material, is subjected to crushing by applying hot compression to its entire surface, except for the central opening (7), in that cut-outs corresponding to the diffusers (22) and to the zones extending laterally each diffuser (22) are formed in said partially crushed expanded structure (6) and in that assembly is performed after the pieces of a second expanded structure (11) have been placed in the cut-out locations corresponding to each diffuser and to the lateral zones, of which the lateral tabs (15, 16) designed to cover the zones that extend the diffusers laterally have been crushed, the cut-outs corresponding to the fluid flow orifices (25, 26) being formed either before or after assembly.

2. Method according to claim 1, characterized in that assembly is performed by high frequency welding.

3. Method according to claim 2, characterized in that the expanded structures (2, 11) are polyethylene grids and the thermoplastic films (18, 19) constituting the seal plane are made of ethyl vinyl acetate.

4. Method according to one of claims 1 or 3, characterized in that the expanded structures respectively of the central opening and of the diffusers are diamond-shaped grids, the grid (11) of each diffuser (22) having a mesh density higher than the grid (2) of the central opening (23).

5. Method according to claim 1, characterized in that as the first expanded structure (2) and the two thermoplastic films (18, 19), have a peripheral centering zone, centering openings are cut before assembly, which openings are in identical positions in each of said zones, with superposition being performed by centering studs, and the separator frame is cut down after assembly by cutting out the assembled peripheral zones.

## Patentansprüche

1. Verfahren zur Herstellung einer Distanzplatte (1) zum Stapeln in Austauschvorrichtungen, wobei die genannte Platte (1) einerseits eine undurchlässige Teilfläche (21) mit einer zentralen Aussparung, Zirkulationsöffnungen für Flüssigkeiten (25, 26) und zwei Verteilern, die die zentrale Aussparung mit den Zirkulationsöffnungen verbindet, und andererseits mindestens eine durchbrochene Struktur, die sich über die zentrale Aussparung und die Zirkulationsöffnungen erstreckt, aufweist, das darin besteht, thermoplastische Schichten (18, 19) in der Form der Teilfläche (21) zusammenzubauen, zwischen denen die durchbrochene Struktur angeordnet ist,
dadurch gekennzeichnet, daß eine erste durchbrochene Struktur (2) aus einem thermoplastischen Material vor dem Zusammenbauen einer Druckverformung durch Warmpressen unterzogen wird, die über die gesamte Fläche mit Ausnahme der zentralen Aussparung (7) ausgeführt wird, daß in der so teilweise druckverformten durchbrochenen Struktur (6) Ausschnitte ausgeführt werden, die den Verteilern (22) und den Bereichen in der seitlichen Verlängerung jedes Verteilers (22) entsprechen, und daß das Zusammenbauen erfolgt, nachdem an der Stelle der Ausschnitte, die den Verteilern und den seitlichen Bereichen entsprechen, Abschnitte einer zweiten durchbrochenen Struktur (11) angebracht wurden, deren Seitenlaschen (15, 16) zum Abdecken der Bereiche in der seitlichen Verlängerung des Verteilers zusammengedrückt wurden, wobei die Ausschnitte, die den Zirkulationsöffnungen für Flüssigkeiten (25, 26) entsprechen, vor oder nach dem Zusammenbauen ausgeführt werden.

2. Verfahren nach Anspruch 1,
dadurch gekennzeichnet, daß das Zusammenbauen durch Schweissen mit Hochfrequenz erfolgt.

3. Verfahren nach Anspruch 2,
dadurch gekennzeichnet, daß die durchbrochenen Strukturen (2, 11) aus Polyäthylen-Gitter bestehen und die thermoplastische Schichten (18, 19) , die die Teilfläche bilden, aus Ethylvinylacetat bestehen.

4. Verfahren nach einem der Ansprüche 1 oder 3,
dadurch gekennzeichnet, daß die durchbrochenen Strukturen der zentralen Aussparung bzw. des Verteilers aus Gittern mit rautenförmigen Maschen bestehen, wobei das Gitter (11) des Verteilers (22) eine höhere Maschendichte hat als das (2) der zentralen Aussparung (23).

5. Verfahren nach Anspruch 1,
dadurch gekennzeichnet, daß, da die erste durchbrochene Struktur (2) und die beiden thermoplastischen Schichten (18, 19) jeweils einen Umfangsbereich zum Zentrieren aufweisen, vor dem Zusammenbauen Zentrieraussparungen ausgeschnitten werden, die identisch in jedem dieser Bereiche angeordnet sind, daß das Aufeinanderlegen ausgeführt wird, indem die Aussparungen auf Zentrierstifte gesetzt werden, und daß sodann nach dem Zusammenbau das Beschneiden der Distanzplatte erfolgt, indem die zusammengesetzten Umfangsbereiche abgefräst werden.
